# FASCICULE DE BREVET EUROPEEN

(11) **EP 2 616 260 B1**
(45) Date de publication et mention de la délivrance du brevet: **02.01.2019**
(21) Numéro de dépôt: 11773045.7
(22) Date de dépôt: 07.09.2011
(51) Int. Cl.: B60K 1/00, B60K 6/00, B60W 20/10, B60K 6/12, B60K 1/04

(54) **CHAINE DE TRACTION POUR VEHICULE HYBRIDE**
ANTRIEBSSTRANG FÜR EIN HYBRIDFAHRZEUG
TRACTION CHAIN FOR A HYBRID VEHICLE

(30) Priorité: 16.09.2010 FR 1057413
(43) Date de publication de la demande: 24.07.2013
(73) Titulaire: Technoboost, 75116 Paris (FR)
(72) Inventeur: GAUTHIER, Pierre, F-92370 Chaville (FR)
(74) Mandataire: Ménès, Catherine
(86) Numéro de dépôt international: PCT/FR2011/052049
(87) Numéro de publication internationale: WO 2012/035237

(56) Documents cités:
- EP-A2- 0 366 095
- WO-A1-2008/033378
- US-A1- 2009 095 549

## Description

La présente invention concerne une chaîne de traction comprenant une motorisation hydraulique, pour un véhicule hybride, ainsi qu'un véhicule hybride équipé d'une telle chaîne de traction.

Les véhicules hybrides comportent généralement un moteur thermique constituant la motorisation principale du véhicule, et une motorisation complémentaire utilisant de l'énergie qui peut être stockée, comme de l'énergie électrique ou hydraulique, pour optimiser le fonctionnement du moteur thermique et réduire sa consommation.

Le document US 2009/095549 A1 divulgue une chaîne de traction des roues motrices pour un véhicule hybride, conforme au préambule de la revendication 1.

Un type de véhicule hybride connu, présenté notamment par le document JP-8282324, utilise un moteur thermique constituant la motorisation principale, et une machine hydraulique reliée à des roues motrices du véhicule, pouvant fonctionner en pompe pour charger des accumulateurs de pression hydrauliques, ou en moteur pour délivrer une puissance mécanique à ces roues motrices en prélevant de l'énergie dans les accumulateurs.

On peut de cette manière pendant les phases de freinage, utiliser la machine hydraulique comme une pompe pour recharger les accumulateurs hydrauliques, en récupérant l'énergie cinétique du véhicule. On peut aussi utiliser la machine hydraulique comme un moteur prélevant le fluide sous pression dans les accumulateurs hydrauliques, et fournir une puissance mécanique qui s'ajoute à celle délivrée par le moteur thermique, pour la traction du véhicule.

Cette utilisation d'énergie hydraulique stockée permet d'optimiser le fonctionnement du moteur thermique, et de réduire sa consommation ainsi que les émissions de gaz polluants. Le stockage d'énergie hydraulique permet aussi de rouler en mode hydraulique seul ou mode zéro émission « ZEV », le moteur thermique restant à l'arrêt avec un véhicule n'émettant pas de gaz polluant.

Un problème qui se pose avec ce type de véhicule, est que la quantité d'énergie stockée est limitée par la capacité des accumulateurs hydrauliques, qui ne disposent pas d'un bon rapport entre la quantité d'énergie stockée et la masse de ces accumulateurs. La distance parcourue en mode zéro émission est alors faible par rapport à la masse embarquée sur le véhicule.

La présente invention a notamment pour but d'éviter ces inconvénients de la technique antérieure, et d'apporter une solution permettant à un véhicule hybride utilisant l'énergie hydraulique pour motoriser ce véhicule, de disposer d'un stockage d'énergie important par rapport à la masse embarquée.

Elle propose à cet effet une chaîne de traction des roues motrices pour un véhicule hybride, conforme à la revendication 1.

Un avantage de cette chaîne de traction est que les batteries de stockage d'énergie électrique comportant par rapport aux accumulateurs hydrauliques et pour une masse donnée, une meilleure capacité de stockage, peuvent délivrer une plus grande quantité d'énergie qui augmente l'autonomie du véhicule, notamment en mode de roulage comprenant le moteur thermique à l'arrêt.

La chaîne de traction selon l'invention peut de plus comporter une ou plusieurs des caractéristiques suivantes, qui peuvent être combinées entre elles.

Avantageusement, la machine hydraulique de traction a ses deux canalisations d'alimentation raccordées d'une part à un accumulateur hydraulique haute pression, et d'autre part à un accumulateur hydraulique basse pression.

Avantageusement, la machine hydraulique de recharge a ses deux canalisations d'alimentation raccordées chacune à un des accumulateurs hydrauliques haute et basse pression.

Selon un mode de réalisation, la machine hydraulique de recharge dispose d'une cylindrée variable qui est pilotée par le moyen de contrôle du module de recharge.

Avantageusement, le module de recharge dispose d'une électrovanne qui permet d'isoler le circuit hydraulique de ce module, du circuit hydraulique de la machine hydraulique de traction.

Avantageusement, le module de recharge constitue un sous-ensemble indépendant qui est rapporté dans la chaîne de traction.

L'invention a aussi pour objet des procédés de fonctionnement pour une chaîne de traction comportant l'une quelconque des caractéristiques précédentes, et comprenant les modes de fonctionnement suivants.

Un premier mode de fonctionnement permet de recharger les accumulateurs hydrauliques, le véhicule étant à l'arrêt ou en marche, en entraînant la machine hydraulique de recharge utilisée en pompe, à partir de la machine électrique consommant un courant électrique délivré par les batteries.

Un deuxième mode de fonctionnement permet de recharger les batteries en entraînant la machine électrique délivrant un courant électrique de charge de ces batteries, à partir de la machine hydraulique de recharge utilisée en moteur recevant de l'énergie des accumulateurs hydrauliques, qui sont eux-mêmes rechargés par la machine hydraulique de traction pendant les phases de freinage du véhicule.

Un troisième mode de fonctionnement est mis en oeuvre quand le module de recharge n'est plus en service, en fermant l'électrovanne d'isolation.

L'invention a de plus pour objet un véhicule hybride disposant d'une chaîne de traction comportant un moteur thermique et une machine hydraulique de traction alimentée par des accumulateurs hydrauliques, constituant deux motorisations permettant d'entraîner les roues motrices de ce véhicule, cette chaîne de traction comportant l'une quelconque des caractéristiques précédentes.

L'invention sera mieux comprise et d'autres caractéristiques et avantages apparaîtront plus clairement à la lecture de la description ci-après donnée à titre d'exemple et de manière non limitative, en référence aux dessins annexés dans lesquels :
- la figure 1 est un schéma d'une chaîne de traction d'un véhicule hybride selon l'invention, comportant un module de recharge ;
- la figure 2 est un schéma de ce module de recharge dans un premier mode de fonctionnement ;
- la figure 3 est un schéma de ce module de recharge dans un deuxième mode de fonctionnement ; et
- la figure 4 est un schéma de ce module de recharge dans un troisième mode de fonctionnement.

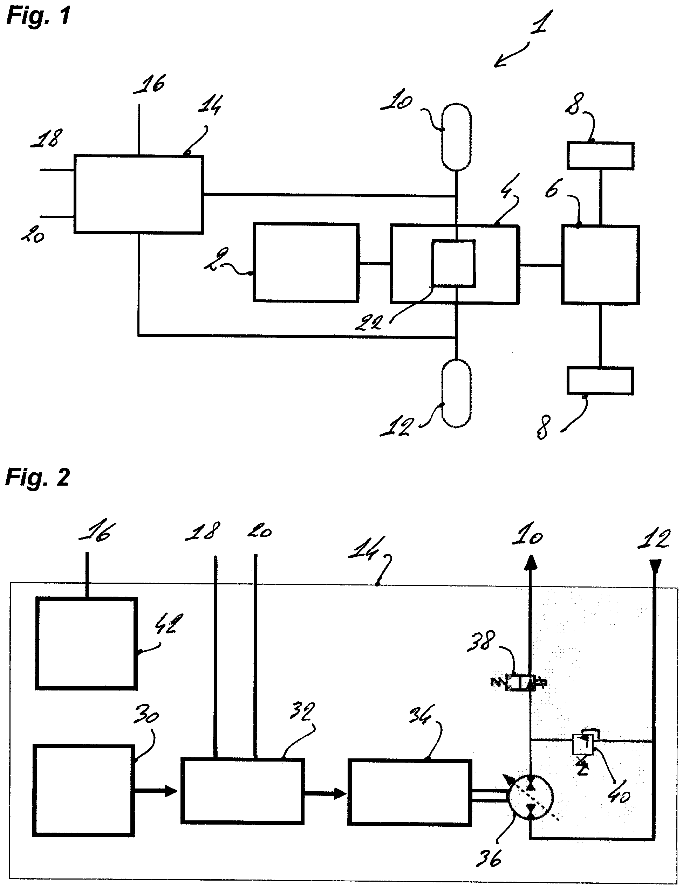

La figure 1 présente une chaîne de traction 1 d'un véhicule automobile, comprenant un moteur thermique 2 entraînant une transmission mécanique 4 reliée à un différentiel 6, transmettant et répartissant le mouvement vers les deux roues motrices 8 d'un essieu, qui peuvent être les roues avant, les roues arrière, ou toutes les roues du véhicule.

La transmission mécanique 4 comporte une machine hydraulique de traction 22 pouvant travailler en moteur ou en générateur de pression hydraulique, dont une canalisation de sortie du fluide est reliée à un accumulateur hydraulique haute pression 10, et l'autre à un accumulateur hydraulique basse pression 12. La machine hydraulique de traction 22 déplace le fluide vers l'accumulateur hydraulique basse 12 ou haute pression 12, pour respectivement travailler en moteur consommant de l'énergie de l'accumulateur haute pression et délivrer une puissance mécanique, ou travailler en pompe et recharger l'accumulateur haute pression.

L'arbre de la machine hydraulique de traction 22 est relié à la transmission mécanique 4, de manière à pouvoir entraîner les roues motrices 8 du véhicule. Le moteur thermique 2 ainsi que la machine hydraulique de traction 22 peuvent être reliés de telle sorte qu'ils forment des motorisations disposées en série, en parallèle, en série et parallèle alternativement, ou en dérivation de puissance, suivant les différentes configurations connues pour la disposition d'une chaîne de traction d'un véhicule hybride.

En variante, le moteur thermique 2 pourrait entrainer les roues avant du véhicule, et la machine hydraulique de traction 22 les roues arrière.

La chaîne de traction comporte de plus un module de recharge 14 des accumulateurs hydrauliques 10, 12, pouvant délivrer une pression hydraulique dans ces accumulateurs pour les recharger, ou consommer la pression hydraulique de ces accumulateurs.

Le module de recharge 14 comporte une liaison 16 avec le réseau électrique de commande du véhicule, une connexion 18 avec le réseau publique de distribution de courant, et une prise de courant 20 délivrant une tension alternative de 220V.

La figure 2 détaille le module de recharge 14 comprenant des batteries de stockage d'énergie électrique 30, pouvant comporter par exemple des accumulateurs électrochimiques ou des condensateurs de forte capacité, qui sont reliés à une électronique de puissance 32.

L'électronique de puissance 32 transforme le courant reçu des batteries 30 pour le délivrer à une machine électrique 34, et piloter cette machine quand elle fonctionne en moteur. Elle transforme aussi le courant reçu de cette machine électrique 34 quand elle fonctionne en génératrice, pour recharger les batteries 30.

Pour cette figure et les suivantes, les flèches reliant les batteries 30, l'électronique de puissance 32 et la machine électrique 34, ainsi que celles disposées sur le circuit hydraulique 10, 12, représentent le sens du transfert d'énergie.

La machine électrique 34 a son arbre relié à une machine hydraulique de recharge 36 pouvant travailler en pompe ou en moteur hydraulique, qui dispose d'une cylindrée fixe ou d'une cylindrée variable.

La machine hydraulique de recharge 36 comportant une cylindrée variable, est pilotée par un calculateur de gestion 42 du module de recharge 14. Avantageusement la machine hydraulique de recharge 36 à cylindrée variable, comprend des pistons axiaux entraînés par un plateau dont l'inclinaison est réglable pour ajuster cette cylindrée.

La machine hydraulique de recharge 36 quand elle travaille en pompe entraînée par la machine électrique 34, comme présenté dans cette figure, reçoit le fluide de l'accumulateur basse pression 12 pour le transférer vers l'accumulateur hydraulique haute pression 10, en passant par une électrovanne 38 qui est ouverte. On a dans ce cas une recharge d'énergie hydraulique dans l'accumulateur hydraulique haute pression 10, à partir de l'énergie électrique contenue dans les batteries 30.

Le circuit hydraulique du module de recharge 14, comporte de plus un limiteur de pression 40 disposé entre les canalisations d'alimentation de la machine hydraulique de recharge 36, qui permet de limiter la différence de pression à une valeur maximale pour assurer la sécurité en cas d'incident dans le système. Il permet notamment de limiter la pression dans le cas où la machine électrique 34 continue à délivrer une puissance avec l'électrovanne 38 fermée, ou avec l'accumulateur de haute pression 10 complètement rempli.

Le calculateur de gestion 42 du module de recharge 14 échange des informations sur l'état du véhicule par la liaison 16, avec le réseau électrique de contrôle des motorisations hybrides 2, 22, pour piloter notamment l'électronique de puissance 32, la cylindrée variable de la machine hydraulique de recharge 36, et l'électrovanne 38.

Le calculateur de gestion 42 échange en particulier des informations sur le niveau d'énergie contenu dans les accumulateurs hydrauliques 10, 12, et dans les batteries 30, de manière à optimiser ces niveaux et à faire fonctionner le moteur thermique 2 dans les meilleures conditions de rendement.

La connexion 18 avec le réseau publique de distribution de courant, est reliée à l'électronique de puissance 32 pour recevoir de l'énergie de ce réseau quand le véhicule est connecté lors d'un stationnement, et la transformer de manière à recharger les batteries 30.

La prise de courant 20 à l'inverse, reçoit du courant électrique des batteries 30 qui est transformé par l'électronique de puissance 32 en courant alternatif 220V, pour pouvoir faire fonctionner des accessoires branchés sur le véhicule.

Le mode de fonctionnement de la figure 2 permet de recharger les accumulateurs hydrauliques 10, 12, le véhicule étant à l'arrêt ou en marche, à partir de courant électrique délivré par les batteries 30. On notera que les batteries 30 comportant pour une masse donnée, un niveau d'énergie supérieur à celui d'accumulateurs hydrauliques, l'autonomie du véhicule en mode zéro émission est plus importante comparée à un véhicule hybride sans module de recharge 14.

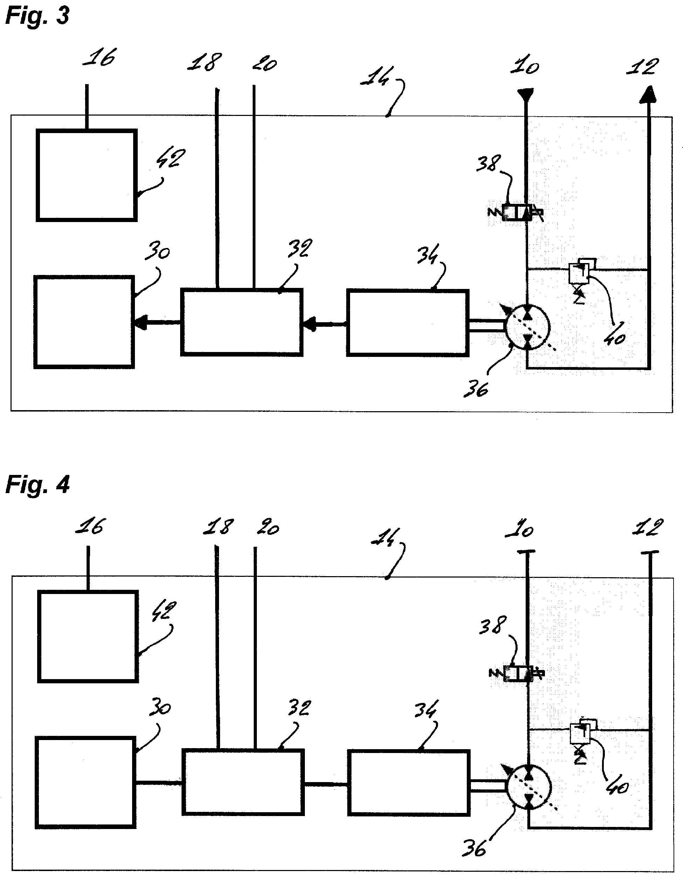

Le mode de fonctionnement de la figure 3 permet de recevoir de l'énergie hydraulique venant du fonctionnement de la transmission 4, l'accumulateur haute pression 10 délivrant un fluide dans la machine hydraulique de recharge 36 fonctionnant en moteur hydraulique, en passant par l'électrovanne 38 qui est ouverte, pour entraîner la machine électrique 34 travaillant en génératrice, et recharger les batteries 30.

On peut notamment récupérer de l'énergie cinétique provenant du freinage du véhicule, lors d'un ralentissement de ce véhicule ou pendant une descente d'une pente, qui est convertie en énergie hydraulique par la machine hydraulique de traction 22, puis en énergie électrique par la machine hydraulique de recharge 36 utilisée en moteur pour entraîner la machine électrique 34, qui produit du courant stocké dans les batteries 30.

De la même manière, la quantité d'énergie stockée dans les batteries 30 est plus importante que dans des accumulateurs hydrauliques de masse équivalente, ce qui permet une plus grande récupération d'énergie.

Le mode de fonctionnement de la figure 4 est mis en oeuvre quand le module de recharge 14 n'est plus en service, notamment quand la charge des batteries 30 ne permet plus d'échange d'énergie avec les accumulateurs hydrauliques 10, 12.

Dans ce cas le calculateur de gestion 42 du module de recharge 14, ferme l'électrovanne 38 pour isoler le circuit hydraulique de ce module, et éviter un débit de fuite dans la machine hydraulique de recharge 36 afin de ne pas provoquer de perte de l'énergie stockée dans les accumulateurs hydrauliques 10, 12.

On notera que le module de recharge 14 peut constituer un sous-ensemble indépendant, qui est rapporté sur un véhicule hybride comprenant une transmission 4 comportant une machine hydraulique de traction 22, pour augmenter l'autonomie de ce véhicule en roulage sans émission de gaz polluant. De cette manière on peut disposer d'un module de recharge 14 constituant un sous-ensemble, qui s'installe facilement sur le véhicule en raccordant des canalisations hydrauliques et des connections électriques.

## Revendications

1. Chaîne de traction des roues motrices pour un véhicule hybride, comprenant un moteur thermique (2) ainsi qu'une machine hydraulique de traction (22) alimentée par des accumulateurs hydrauliques (10, 12), constituant deux motorisations permettant d'entraîner les roues motrices (8) du véhicule, ladite chaîne de traction comprenant de plus un module de recharge (14) disposant de batteries de stockage d'énergie électrique (30) reliées à une machine électrique (34), qui entraîne une machine hydraulique de recharge (36) alimentant les accumulateurs hydrauliques (10, 12), ladite chaîne de traction étant **caractérisée en ce qu'**elle comprend en outre un moyen de contrôle (42) de ce module de recharge (14) relié aux moyens de contrôle des motorisations (2, 22) du véhicule ; ledit module de recharge (14) constituant un sous-ensemble qui s'installe sur le véhicule en raccordant des canalisations hydrauliques et des connexions électriques, lesdites batteries de stockage d'énergie électrique (30) délivrant une quantité d'énergie augmentant l'autonomie du véhicule en mode de roulage comprenant le moteur thermique (2) à l'arrêt.

2. Chaîne de traction selon la revendication 1, **caractérisée en ce que** la machine hydraulique de traction (22) a ses deux canalisations d'alimentation raccordées d'une part à un accumulateur hydraulique haute pression (10), et d'autre part à un accumulateur hydraulique basse pression (12).

3. Chaîne de traction selon la revendication 2, **caractérisée en ce que** la machine hydraulique de recharge (36) a ses deux canalisations d'alimentation raccordées chacune à un des accumulateurs hydrauliques haute (10) et basse pression (12).

4. Chaîne de traction selon l'une quelconque des revendications précédentes, **caractérisée en ce que** la machine hydraulique de recharge (36) dispose d'une cylindrée variable, qui est pilotée par le moyen de contrôle (42) du module de recharge (14).

5. Chaîne de traction selon l'une quelconque des revendications précédentes, **caractérisée en ce que** le module de recharge (14) dispose d'une électrovanne (38) qui permet d'isoler le circuit hydraulique de ce module, du circuit hydraulique de la machine hydraulique de traction (22).

6. Procédé de fonctionnement d'une chaîne de traction selon l'une quelconque des revendications précédentes, **caractérisé en ce qu'**il comporte un premier mode de fonctionnement permettant de recharger les accumulateurs hydrauliques (10, 12), le véhicule étant à l'arrêt ou en marche, en entraînant la machine hydraulique de recharge (36) utilisée en pompe, à partir de la machine électrique (34) consommant un courant électrique délivré par les batteries (30).

7. Procédé de fonctionnement d'une chaîne de traction selon l'une quelconque des revendications 1 à 5, **caractérisé en ce qu'**il comporte un deuxième mode de fonctionnement permettant de recharger les batteries (30), en entraînant la machine électrique (34) délivrant un courant électrique de charge de ces batteries, à partir de la machine hydraulique de recharge (36) utilisée en moteur recevant de l'énergie des accumulateurs hydrauliques (10, 12), qui sont eux-mêmes rechargés par la machine hydraulique de traction (22) pendant les phases de freinage du véhicule.

8. Procédé de fonctionnement d'une chaîne de traction selon la revendication 5, **caractérisé en ce qu'**il comporte un troisième mode de fonctionnement mis en oeuvre quand le module de recharge (14) n'est plus en service, en fermant l'électrovanne d'isolation (38).

9. Véhicule hybride disposant d'une chaîne de traction (1) comportant un moteur thermique (2), et une machine hydraulique de traction (22) alimentée par des accumulateurs hydrauliques (10, 12), constituant deux motorisations permettant d'entraîner les roues motrices (8) de ce véhicule, **caractérisé en ce que** cette chaîne de traction (1) est réalisée selon l'une quelconque des revendications 1 à 5.

## Patentansprüche

1. Antriebsstrang der Antriebsräder für ein Hybridfahrzeug, das eine Brennkraftmaschine (2) sowie eine hydraulische Antriebsmaschine (22) umfasst, die von hydraulischen Speichern (10, 12) versorgt wird, die zwei Antriebe bilden, die es erlauben, die Antriebsräder (8) des Fahrzeugs anzutreiben, wobei der Antriebsstrang außerdem ein Auflademodul (14) umfasst, das über Batterien zum Speichern elektrischer Energie (30) verfügt, die mit einer Elektromaschine (34) verbunden sind, die eine hydraulische Auflademaschine (36) antreibt, die die hydraulischen Speicher (10, 12) versorgt, Antriebsstrang **dadurch gekennzeichnet, dass** er außerdem ein Mittel (42) zum Steuern dieses Auflademoduls (14) umfasst, das mit den Steuermitteln der Antriebe (2, 22) des Fahrzeugs verbunden ist; wobei das Auflademodul (14) eine Unterbaugruppe bildet, die auf dem Fahrzeug durch Anschließen der hydraulischen Kanalisationen und der elektrischen Verbindungen installiert wird, wobei die Batterien zum Speichern elektrischer Energie (30) eine Energiemenge liefern, die die Autonomie des Fahrzeugs im Fahrmodus, der die Brennkraftmaschine (2) im Stillstand umfasst, erhöht.

2. Antriebsstrang nach Anspruch 1, **dadurch gekennzeichnet, dass** die hydraulische Antriebsmaschine (22) ihre zwei Versorgungskanalisationen einerseits an einen hydraulischen Hochdruckspeicher (10) und andererseits an einen hydraulischen Niederdruckspeicher (12) angeschlossen hat.

3. Antriebsstrang nach Anspruch 2, **dadurch gekennzeichnet, dass** die hydraulische Auflademaschine (36) ihre zwei Versorgungskanalisationen jeweils an einen des hydraulischen Hochdruck- (10) und Niederdruckspeicher (12) angeschlossen hat.

4. Antriebsstrang nach einem der vorstehenden Ansprüche, **dadurch gekennzeichnet, dass** die hydraulische Auflademaschine (36) über einen variablen Hubraum verfügt, der von dem Steuermittel (42) des Auflademoduls (14) gesteuert wird.

5. Antriebsstrang nach einem der vorstehenden Ansprüche, **dadurch gekennzeichnet, dass** das Auflademodul (14) über ein Magnetventil (38) verfügt, das es erlaubt, den Hydraulikkreislauf dieses Moduls von dem Hydraulikkreislauf der hydraulischen Antriebsmaschine (22) zu trennen.

6. Betriebsverfahren eines Antriebsstrangs nach einem der vorstehenden Ansprüche, **dadurch gekennzeichnet, dass** es einen ersten Betriebsmodus umfasst, der es erlaubt, die hydraulischen Speicher (10, 12) des Fahrzeugs beim Stillstand oder beim Betrieb aufzuladen, indem die hydraulische Auflademaschine (36), die als Pumpe verwendet wird, ausgehend von der Elektromaschine (34), die einen elektrischen Strom, der von den Batterien (30) geliefert wird, verbraucht, angetrieben wird.

7. Betriebsverfahren eines Antriebsstrangs nach einem der Ansprüche 1 bis 5, **dadurch gekennzeichnet, dass** es einen zweiten Betriebsmodus umfasst, der es erlaubt, die Batterien (30) aufzuladen, indem die Elektromaschine (34), die einen Ladestrom dieser Batterien liefert, ausgehend von der hydraulischen Auflademaschine (36) betrieben wird, die als Motor verwendet wird, der die Energie der hydraulischen Speicher (10, 12) empfängt, die selbst von der hydraulischen Antriebsmaschine (22) während der Bremsphasen des Fahrzeugs aufgeladen werden.

8. Betriebsverfahren eines Antriebsstrangs nach Anspruch 5, **dadurch gekennzeichnet, dass** es einen dritten Betriebsmodus umfasst, der umgesetzt wird, wenn das Auflademodul (14) nicht mehr in Betrieb ist, indem das Absperrmagnetventil (38) geschlossen wird.

9. Hybridfahrzeug, das über einen Antriebsstrang (1) verfügt, der eine Brennkraftmaschine (2) und eine hydraulische Antriebsmaschine (22) umfasst, die von hydraulischen Speichern (10, 12) versorgt wird, die zwei Motorisierungen bilden, die es erlauben, die Antriebsräder (8) dieses Fahrzeugs anzutreiben, **dadurch gekennzeichnet, dass** dieser Antriebsstrang (1) nach einem der Ansprüche 1 bis 5 hergestellt ist.

## Claims

1. A traction chain of the drive wheels for a hybrid vehicle, including a heat engine (2) and a hydraulic traction machine (22) powered by hydraulic accumulators (10, 12), constituting two power units permitting the driving of the drive wheels (8) of the vehicle, said traction chain including in addition a recharge module (14) having electrical energy storage batteries (30) connected to an electric machine (34), which drives a hydraulic recharge machine (36) powering the hydraulic accumulators (10, 12), said traction chain being **characterized in that** it further includes a means (42) for controlling this recharge module (14) connected to the means for controlling the power units (2, 22) of the vehicle; said recharge module (14) constituting a sub-assembly which is installed on the vehicle by connecting hydraulic lines and electric connections, said electrical energy storage batteries (30) delivering a quantity of energy increasing the autonomy of the vehicle in running mode including the heat engine (2) when stopped.

2. The traction chain according to claim 1, **characterized in that** the hydraulic traction machine (22) has its two supply lines connected on the one hand to a high pressure hydraulic accumulator (10), and on the other hand to a low pressure hydraulic accumulator (12).

3. The traction chain according to claim 2, **characterized in that** the hydraulic recharge machine (36) has its two supply lines each connected to one of the high pressure (10) and low pressure (12) hydraulic accumulators.

4. The traction chain according to any one of the preceding claims, **characterized in that** the hydraulic recharge machine (36) has a variable cylinder capacity, which is driven by the controlling means (42) of the recharge module (14).

5. The traction chain according to any one of the preceding claims, **characterized in that** the recharge module (14) has a solenoid valve (38) which permits the hydraulic circuit of this module to be insulated from the hydraulic circuit of the hydraulic traction machine (22).

6. A method of operation of a traction chain according to any one of the preceding claims, **characterized in that** it comprises a first operating mode permitting the hydraulic accumulators (10, 12) to be recharged, the vehicle being stopped or moving, by driving the hydraulic recharge machine (36) used as a pump, from the electric machine (34) consuming an electric current delivered by the batteries (30).

7. The method of operation of a traction chain according to any one of claims 1 to 5, **characterized in that** it comprises a second operating mode permitting the batteries (30) to be recharged by driving the electric machine (34) delivering an electric charge current of these batteries from the hydraulic recharge machine (36) used as a motor receiving energy from the hydraulic accumulators (10, 12), which are themselves recharged by the hydraulic traction machine (22) during the braking phases of the vehicle.

8. The method of operation of a traction chain according to claim 5, **characterized in that** it comprises a third operating mode implemented when the recharge module (14) is no longer in service, by closing the insulation solenoid valve (38).

9. A hybrid vehicle having a traction chain (1) comprising a heat engine (2), and a hydraulic traction machine (22) powered by hydraulic accumulators (10, 12), constituting two power units permitting the driving of the drive wheels (8) of this vehicle, **characterized in that** this traction chain (1) is realized according to any one of claims 1 to 5.
